Europäisches Patentamt

(19) European Patent Office

Office européen des brevets

(11) Publication number: **0 002 338**

A2

(12) **EUROPEAN PATENT APPLICATION**

(21) Application number: 78300666.1

(22) Date of filing: 24.11.78

(51) Int. Cl.²: **G 03 B 1/18**
**B 65 H 17/26**

(30) Priority: 24.11.77 GB 48919/77

(43) Date of publication of application:
13.06.79 Bulletin 79/12

(84) Designated contracting states:
DE GB NL

(71) Applicant: CAMBRIDGE CONSULTANTS LIMITED
Bar Hill
Cambridge CB3 8EZ(GB)

(72) Inventor: McCombie, Alan Keith
49 Grantchester Street
Cambridge(GB)

(72) Inventor: Temple, Stephen
66 Girton Road Girton
Cambridge(GB)

(74) Representative: Beresford, Keith Denis Lewis et al,
R G C Jenkins & Co 53-64 Chancery Lane
London WC2A 1QU(GB)

(54) Web transport mechanism.

(57) A web transport mechanism suitable for transporting film in cameras or projectors includes inner and outer tracks defining between them an endless path. The inner track is driven so as to cause a flexible member which is located between the tracks and in engagement therewith to roll around the outer track. The engagement between the flexible member of the track is maintained by the resilience of the flexible member in one embodiment and by magnetic forces in another embodiment. A web support surface is provided adjacent the track and arranged so that the flexible member rolls over this surface as it moves around its path. Film supply and take-up means are disposed at positions upstream and downstream (with respect to the direction of movement of the member) of the surface. Each time the member moves around its path, it successively moves a portion of the web into contact with the surface, holds it against the surface and releases it to permit a fresh portion of web to be moved into contact with, held against and released from the surface. Several flexible members may be provided in the path at spaced apart positions. Synchronizing means may be employed to ensure synchronized station of the movement of the member or members.

FIG.1

WEB TRANSPORT MECHANISM

This invention relates to a web transport mechanism, particularly but not exclusively for transporting film in cameras or projectors.

Film transport mechanisms have commonly consisted in the past of two intermittent drives, one of which moves the film longitudinally while the other operates a clamping plate acting perpendicular to the film plane. Such mechanisms are complex, produce shock and vibration, and are limited in operating speed. They also involve the film in a sliding motion over or between stationary surfaces, which may cause scruffing of the film and degrade the picture quality or damage the mechanism by deposition of emulsion particles.

As an alternative, a so-called rolling loop film transport mechanism has been proposed in which a loop of film formed in a gap in a moving surface is used to advance the film by one frame over a stationary aperture, the film being located to prevent motion relative to the stationary aperture during recording by pins projecting through perforations in the film. This mechanism has the advantage of avoiding mechanical reciprocation in its component parts, but still causes sliding motion of the film over a stationary surface during the periods of increase and decrease in the size of the film loop. Further the rolling loop mechanism is not able by virtue of its construction to clamp the film onto the image aperture with intimate contact. Details of such mechanism may be found in UK Patent Specification Nos. 1171248 and 1278536.

An improved rolling loop mechanism, in which these difficulties are alleviated, is proposed in UK Patent Application No. 16512/76 and USSN 866003 filed 30th December 1977 and comprises a film supply means and a film take-up means placed either side of a stationary support and an adjacent continually rotating cage-like rotor. The rotor comprises two or more groups of rollers separated by openings. Film is trapped and gripped between the rollers and the support means, which is arcuate to conform with the path of the rollers. While one frame is thus gripped, film supply for the succeeding

- 3 -

0002338

frame issues from the supply means and forms into a loop which enters the succeeding opening in the cage, and is in turn trapped by the next roller group and rolled onto the support. In another embodiment, the support is flat and not arcuate, and in this case the roller groups are interconnected by chains which are guided in a closed path which includes a straight line portion. The rotor is therefore flexible in this embodiment. Both embodiments involve constructional complexities, and the resulting devices are comparatively bulky. Some of this bulk results from the need to provide clear passage for a loop of film which in some cases cannot be less than two frame lengths long.

A further disadvantage of the above mentioned devices is the profusion and weight of the rollers. At least two groups are required in order that the rotor will be balanced. Each roller passes over the back of the film at high speed and with substantial pressure, which involves a higher risk of wear and damage than any corresponding clamping device in which a single stationary clamp is applied.

The rollers have to be small in order to be closely spaced; this places a premium on accuracy of construction because the clamping action depends on

0002338

an interference fit between the rollers and the tracks. If the contact stresses are not to become excessive, this interference must be kept extremely small in proportion to the roller diameter.

It is an object of the a preferred form of the invention to provide a means of film transfer and clamping which avoids these difficulties without sacrificing the advantages of the rolling loop method.

The invention provides a mechanism for transporting a web through a work zone and intermittently holding portions of said web stationary in said work zone comprising:

inner and outer track means mounted at fixed positions with respect to each other and defining between them an endless path; a flexible member located in said path and constructed to generate an expansion force which expands said member into engagement with said inner and outer track means; drive means for driving at least a portion of the inner track means to cause said flexible member to roll along the outer track means and move respectively around said endless path; support means including a web support surface located adjacent a portion of said endless path and defining said work station; and web supply and take-up means arranged respectively to supply web to and remove web from input and output zones at opposite sides of said work station; said mechanism being operable such that, each time said member moves around said path, said member successively moves a portion of said web supplied by said supply means into contact with said surface, holds said portion in contact with said surface and releases said portion to permit a fresh portion of the web to be moved into contact with, held against and released from said surface.

In one embodiment of the present invention, film supply and take-up means and support means are provided as hitherto. A short distance above the support means is a flat endless belt running between two fixed rollers whose centre distance approximately equals the length of the support or the film frame length. A guide is provided between the rollers to prevent the belt sagging inwards. The belt is surrounded by a stationary housing which is so shaped as to define a substantially uniform space around the belt, equal to the space between the belt and the support means. The structure is completed by ba.. and front plates which completely enclose this space. Trapped within the space is a free element comprisi.. an endless loop of flexible spring material, which i. elastic in bending. The element is made as a cyli...

of diameter greater than the height of the space, which has been elastically deformed prior to insertion and is therefore exerting a spring pressure against the stator and also against the belt. If the belt is then driven by one of the rollers, the element will roll round and round the stator, and its action upon the film will be identical to that of the groups of rollers previously used. Thus the rolling spring element will intercept the film, trap it against the support means, roll it on, hold it clamped while the exposure is made, and allow it to peel off.

The present embodiment may be so proportioned that the loop of film will pass freely between the belt and the support. However a further advantage of the device is that this space may be so proportioned as to be considerably less than the full natural height of the film loop. In such a case, the film loop enters the housing and presses against the moving belt at the centre. This pressure causes the belt to engage the film frictionally and thus transfer the free part of the loop through the restricted space.

The element can be so light that there is no need for a complimentary rotating element to provide balance and prevent vibration. Thus this single part may replace the previously proposed rotor with its shafts, bearings and numerous rollers. A further advantage of the element is its adaptability to variations of the

0002338

distance between stator and belt.

The invention is described further by way of example with reference to the accompanying drawings, in which:

Figure 1 is a longitudinal section through a film transport mechanism for a camera, according to a first embodiment of the invention;

Figure 2 is a section on the line II-II of Figure 1;

Figure 3 is a perspective view of a resilient rolling member included in the embodiment of Figures 1 and 2, showing its natural shape;

Figures 4 to 8 are views similar to Figure 1 but showing the mechanism at different stages in its cycle of operations;

Figures 9, 10 and 11 are side views of three alternative forms of rolling member which may be employed in the embodiment of Figures 1 to 8;

Figure 12 is a cross section on the line XII-XII of Figure 11;

Figure 13 is a cross section similar to Figure 12, but showing a modification;

Figure 14 is a perspective view showing part of a strip of resilient material from which a rolling member which may be employed in the embodiment of Figures 1 to 8 may be made;

Figure 15 is a perspective view showing, in its

- 8 -

0002338

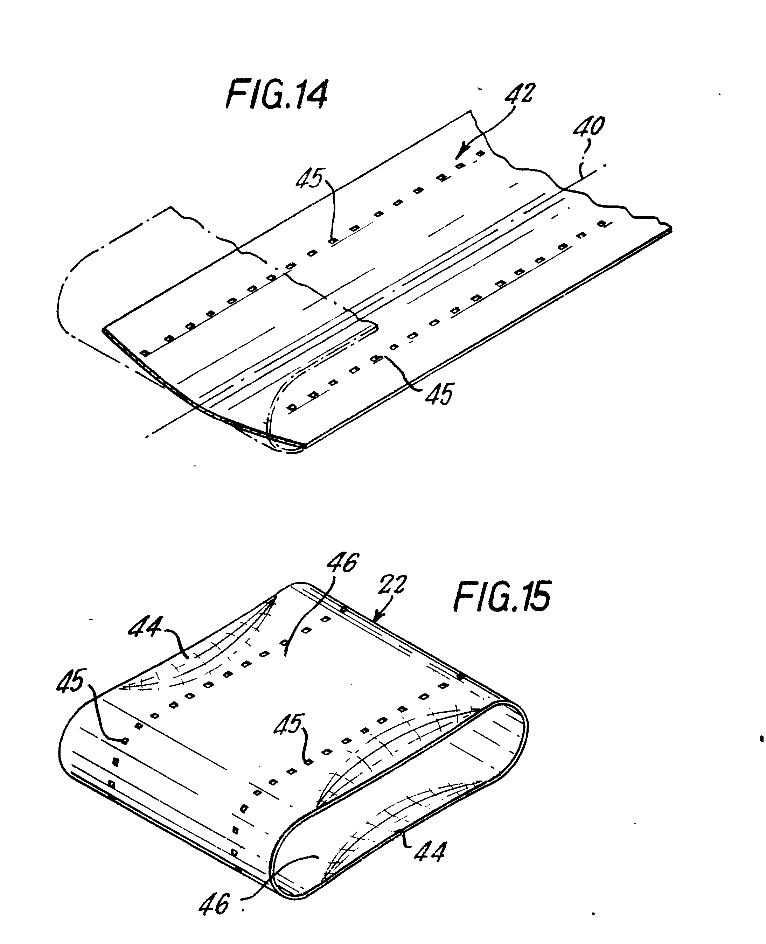

natural shape, the rolling member made from the strip of material of Figure 14;

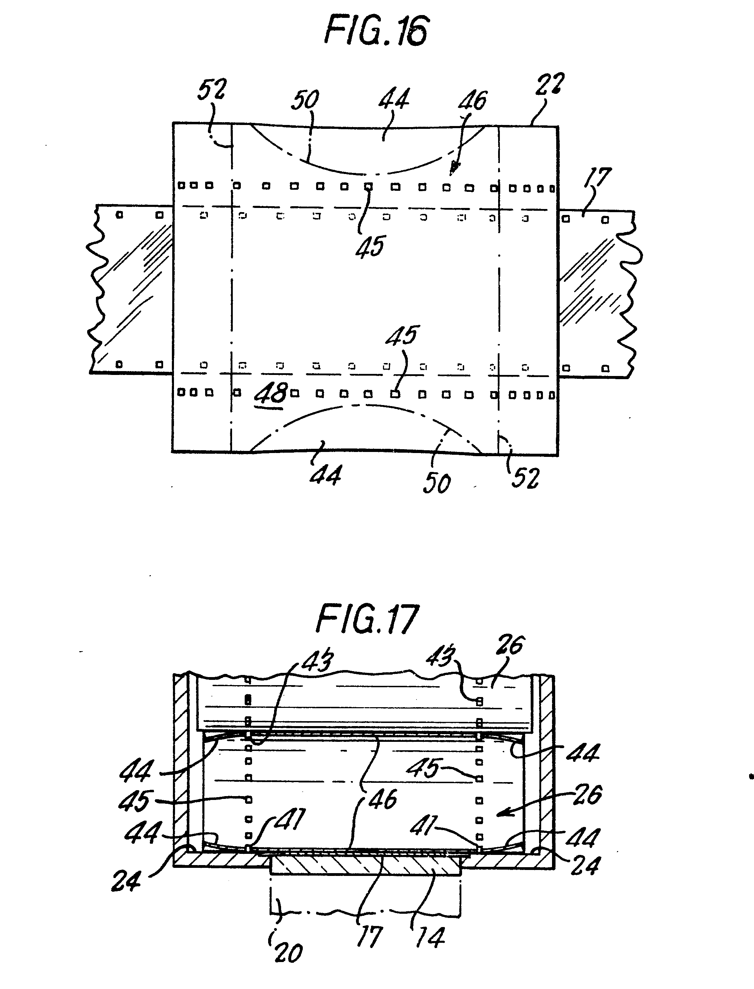

Figure 16 is a diagrammatic plan view illustrating the clamping forces produced by the member of Figure 14 in use;

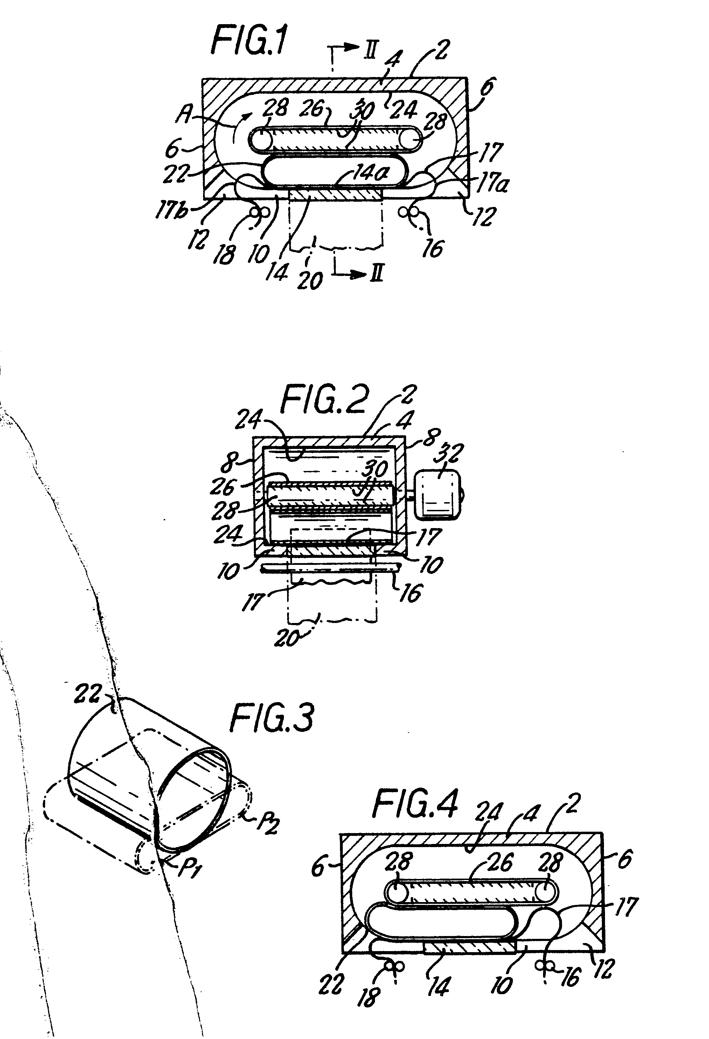

Figure 17 is a partial cross section taken as on the line II-II of Figure 1 but showing the rolling member of Figure 14 in operation;

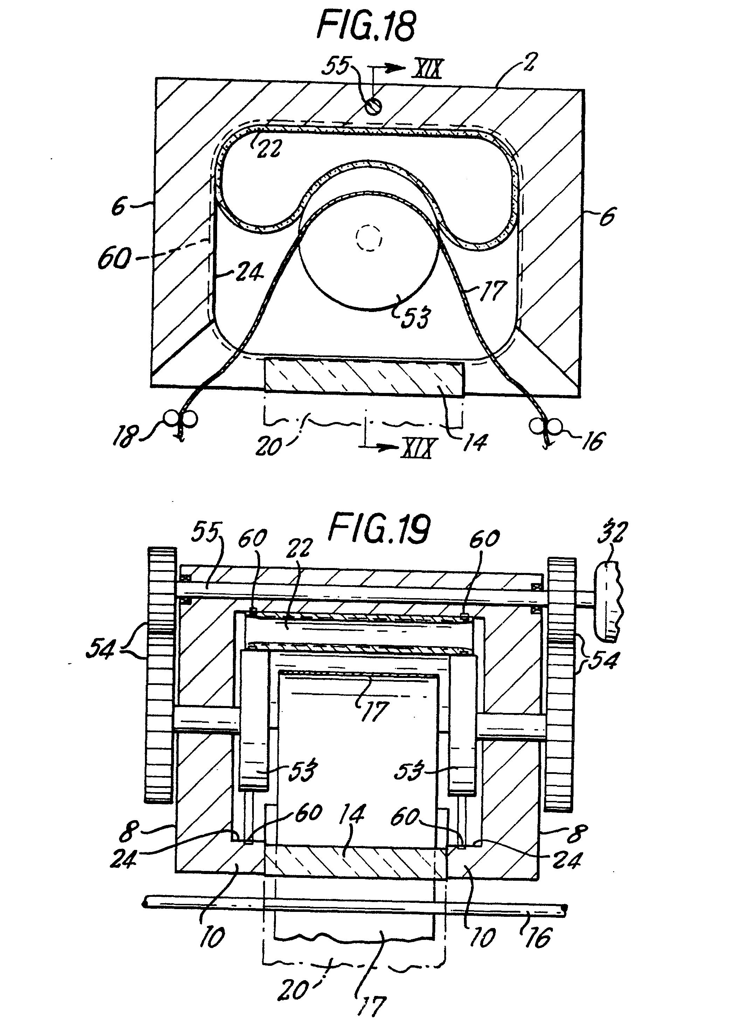

Figure 18 is a view similar to Figure 1 but showing another embodiment of the invention;

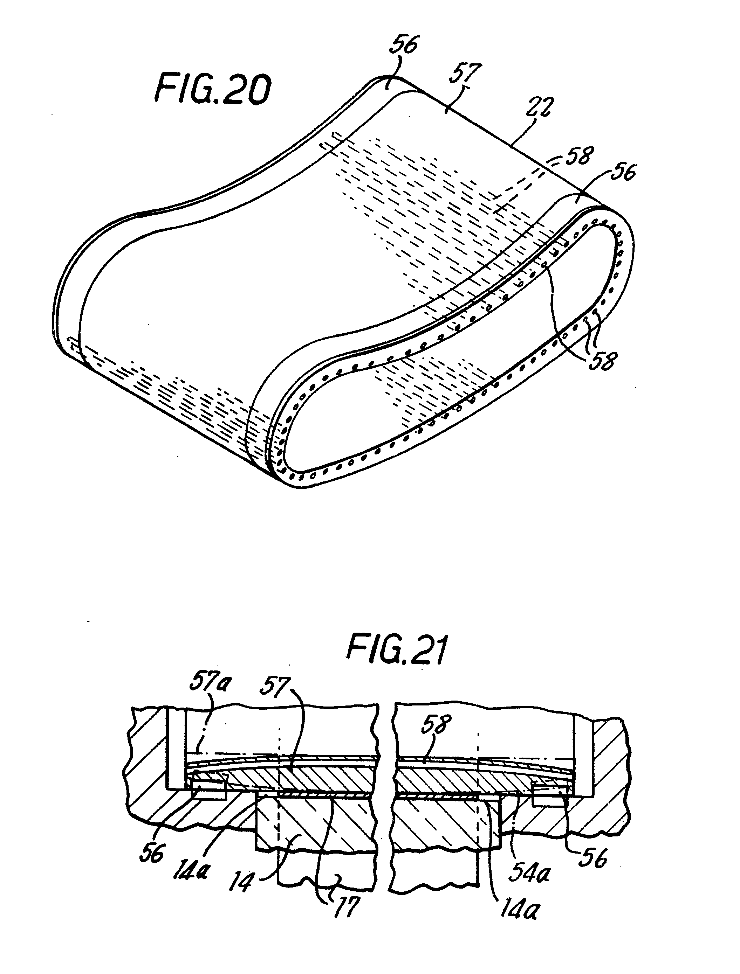

Figure 19 is a cross section on line XIX-XIX of Figure 18;

Figure 20 is a perspective view of the rolling member included in the embodiment of Figures 18 and 19 and showing it approximately in its natural shape;

Figure 21 is a partial sectional view, similar to Figure 19, but on an enlarged scale and showing the rolling member in a different position;

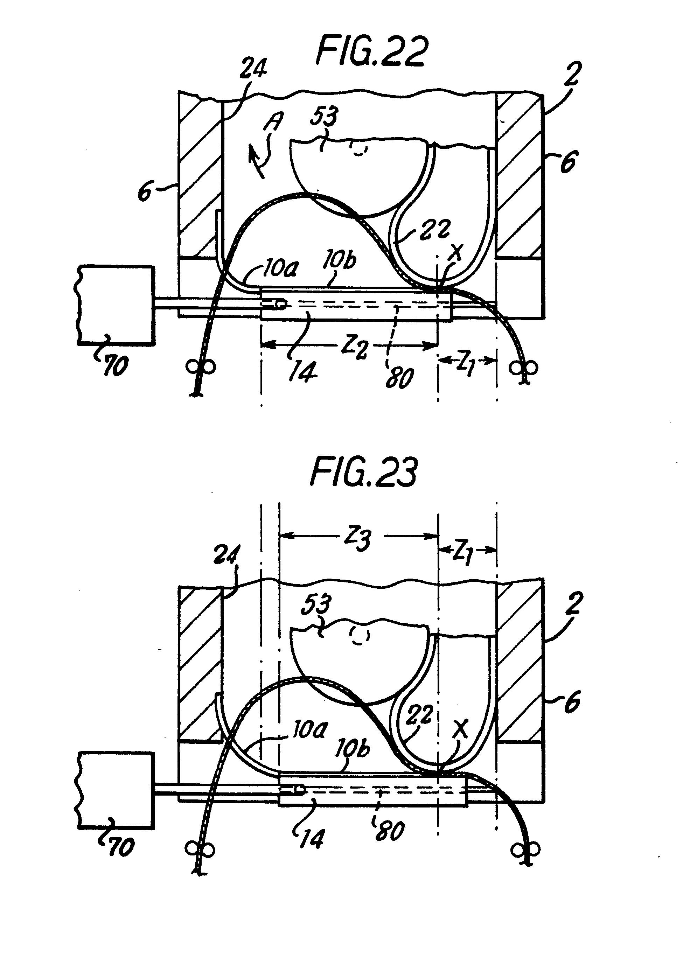

Figure 22 is a partial side view, similar to Figure 1, and showing another embodiment of the invention; and

Figure 23 is a view, similar to Figure 22, and showing the embodiment thereof but with certain parts in a different position.

The film transport mechanism shown in Figures 1 to 8 comprises a housing 2 having a top wall 4, end walls 6 and side walls 8. The housing 2 is provided with a pair of inwardly directed flanges 10 at its bottom, defining between them an opening 12 which extends between the end walls 6. A glass support plate 14 is mounted at a fixed position with respect to the housing midway along the opening 12. A film feed mechanism 16 is provided for feeding film into the housing 2 at one side of the plate 14 and a take-up mechanism 18 is provided for taking film out of the housing 2 at the opposite side of the plate 14 The supply and take-up mechanisms 16 and 18 are continuously operable. A device 20 represented only diagrammatically by chain dotted lines and comprising, for example, an image intensifier and/or an optical system is provided for forming, at the upper surface 14a of the plate images to be recorded on the film 17.

During recordal of an image on the film 17, the film 17 is pressed against the surface 14a of the plate 14 by a flexibly resilient member 22 whose natural shape is cylindrical as shown in Figure 3 but which is compressed from that shape to a somewhat elongated shape, as indicated by chain dotted lines in Figure 3 and as illustrated in Figure 1, between an endless oval track 24 formed by the inner surfaces of the walls 4

C002338

and 6 and the flanges 10, and a belt 26 mounted in the housing 2 on rollers 28. The runs of the belt between the rollers 28 are supported by supports 30 indicated only diagrammatically in the drawings so that these runs of the belt are not caused to be pushed inwardly by the resilient member 22 when in the position shown in Figure 1, for example.

The track 24 and the belt 26, which effectively constitutes an inner track, define between them an endless oval path around which the member 22 is arranged to orbit in the direction of the arrow A. In order to cause this movement of the member 22, a motor 32 is provided for driving one or both of the rollers 28 so as to cause the belt 26 to rotate. The member 22 is in frictional engagement both with the belt 26 and with the track 24 and thus this rotation of the belt 26 causes the member 22 to roll around the track 24, the direction of rotation of the belt 26 also being in the same direction as the arrow A.

Thus, in operation, while the member 22 is in the position shown in Figure 1, it holds a portion of the film 17 flat against the upper surface 14a of the plate 14. In order to accommodate the film whilst permitting the member 22 to remain in engagement with the track 24 at this time, the surface 14a of the plat: 14 is spaced slightly downwardly, by an amou.r substantially equal to the thickness of the film, relative to the upper surfaces of the flanges 10 at thi: region. This can be seen in Figure 2. The belt 26 is driven continuously, and thus the period for whi.h the film is held stationary depends upon the speed a which the belt 26 is driven and the length of the meml: 22 as measured in its direction of movement. During the period while the film is held stationary is shown in Figure 1, the film supply mechanism 1 is continuously supplying film to form a loop 17a of .ilm, and the take-up mechanism 18 is taking up fill. 'rom a loop 17b at the opposite side of the plate 18.

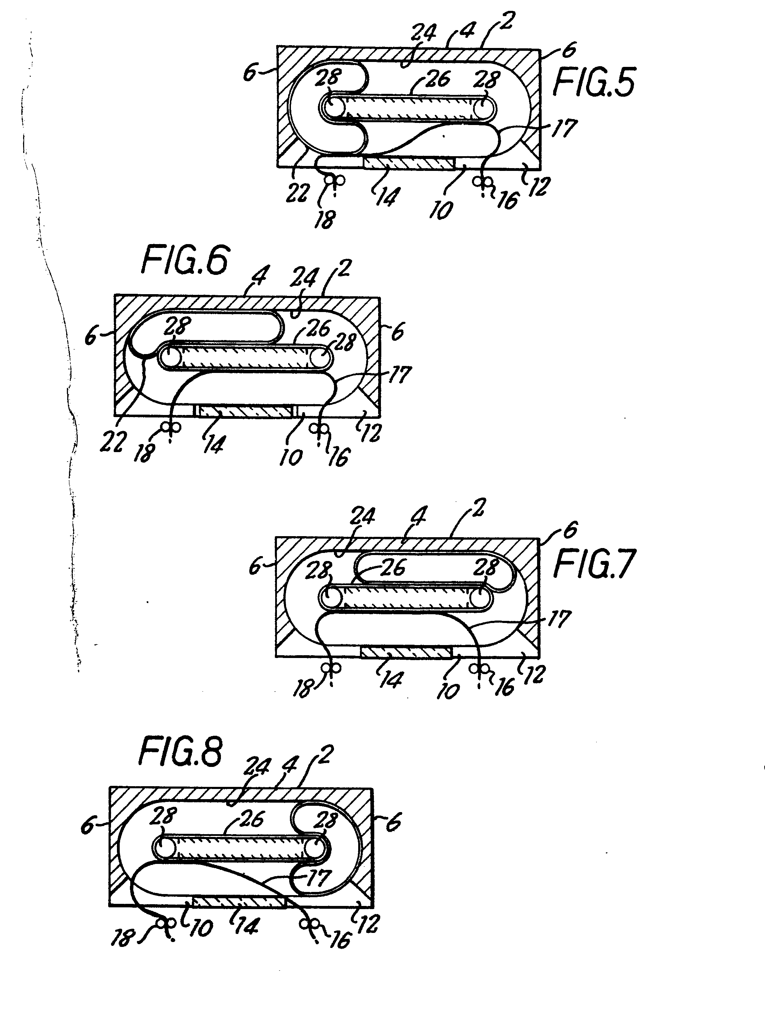

When the r: ber 22 has moved from the position shown in Figure to the position shown in Figure 4, which is after completion of recordal of an image, the portion of t: film which was held against the 'ipper surface of he plate 14a begins to be released. Such releasing continues as the member 22 moves on .om the positio shown in Figure 4 to that shown in F'rure 5, at which time the released film has, under its own resilience moved into contact with the lower run of the belt 26 until the position shown in Fig la 6 is reached The frictional engagement between the belt 26 and the film 17 causes the film to be displaced leftwardly, from the position shown in Figure 6, to that shown in Figure 7 and eventually to that shown in Figure 8, at which time the member 22 is again approaching the plate 14 so that a further portion of the film 17 may be clamped, for recordal of an image thereon, as shown in Figure 1. This cycle of operations is carried on repeatedly, as the belt 26 is driven continuously to cause the member 22 to move around its path and as the supply and take-up devices 16 and 18 are continuously operated.

The housing 2, member 22 and belt 26 may be constructed of any of a variety of different suitable materials provided that frictional engagement between the member 22 and both the track 24 and the belt 26 is ensured and provided that the material of the member 22 has sufficient durability to withstand continuous deformation and sufficient resilience to maintain the required frictional engagement referred to above. The material of the member 22 should preferably be as light as possible so as to minimise oscillating inertia forces in the apparatus. One material which is suita for the member 22 is polyester.

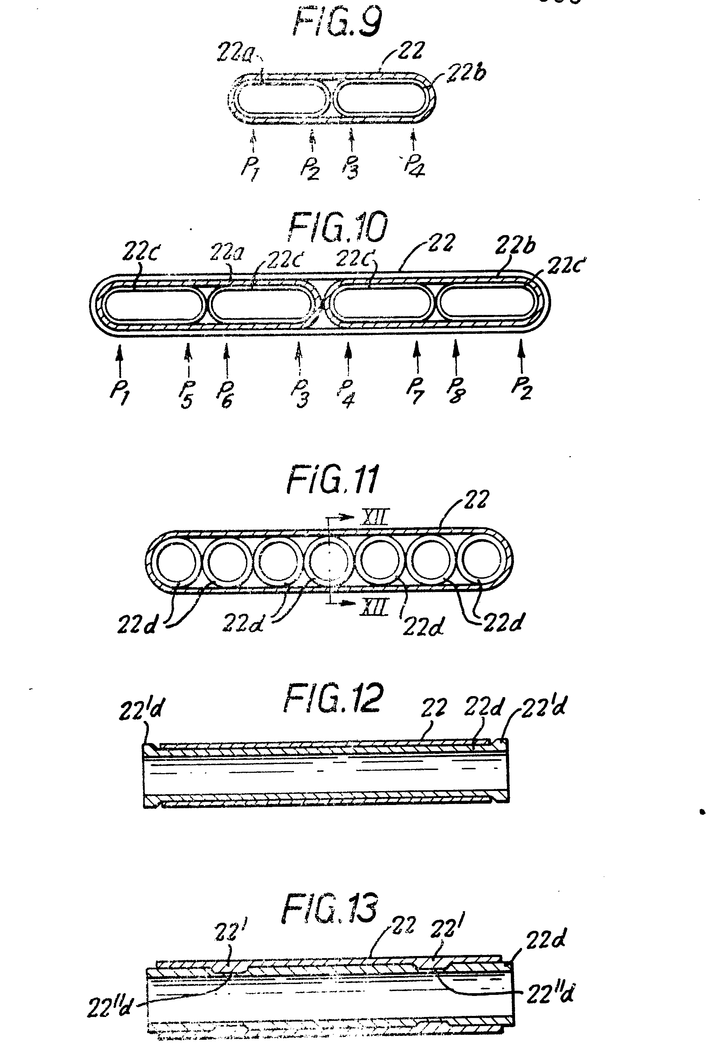

With the member 22 as illustrated in Figures 1 8, uniform pressure will not in fact be applied to

0002338

film as it is held on the plate since the pressure produced by the member 22 is concentrated along tranverse regions where the material bends. These regions are at opposite ends of the member 22 and in Figure 3, are indicated by the reference numbers P1 and P2. Inbetween the regions P1 and P2, substantially no pressure is exerted. Thus the pressure is essentially concentrated in two lines at the ends of the member 22 and extending transversely there- across. Figure 9 shows an embodiment in which additional pressure lines extending transversely across the member 22 are created by placing two additional members 22a and 22b within the member 22 and these develop pressure along the additional lines P3 and P4 indicated by arrows in Figure 9. The members 22a and 22b are, like the member 22, cylindrical in their natural unstressed shape.

In Figure 10, each of the members 22a and 22b contains an additional two similar but smaller members 22c so that in addition to the pressure lines P1 to P4, further pressure lines P5 to P8 are produced.

In the embodiment of Figure 11, a multiplicity of rollers 22d each of resilient material is mounted within the member 22 and arranged so as to be slightly compressed when the member 22 is mounted within the housing 2. Thus a pressure line extending transversely to the member 22 is produced by each roller 22d. As shown in Figure 12, each roller 22d may be provided with an end flange 22'd for ensuring that the roller stays within the member 22. In the modification of Figure 13, the end flanges 22'd are omitted and instead grooves 22''d are provided in the rollers 22d and receive ribs 22' on the internal surface of the member 22.

In each of the embodiments of Figures 9 to 13, the member 22 may be of the same material as described with reference to the embodiment of Figures 1 to 8. However, this is not essential because the member 22 would in fact be supported by the internal members 22a and 22b in Figure 9; in Figure 10 the members 22c will support all the members 22a, 22b and 22 which, therefore, need not be of resilient material; and in Figure 10 the rollers 22d will support the member 22 which, therefore, need not be of resilient material. Thus, in the embodiments of Figures 9 to 13, the innermost members may, if desired, solely provide the resilience of the member as a whole.

Figures 14 to 17 show another method of obtaining more uniform pressure application onto the film 17 from the rolling member 22. In this embodiment, the

- 15 -   0002338

member 22 is made from a strip of material whose unstressed shape is as shown in Figure 14, that is to say the strip is curved about an axis parallel to its longitudinal centre line 40. The curvature is sharper in the region of said centre line 40 than in regions near to the edges of the strip. The member 22 is made by bending the strip in the direction shown in Figure 14, that is to say that the surface 42 of the strip which is concave when unstressed is inside the member 22 when formed. After bending the strip, the two ends are brought together and joined and the member 22 assumes the shape shown in Figure 15 even before it is inserted into the casing 2. As seen in Figure 15, the member 22 of this embodiment assumes an elongated shape and edge portions 44 of the major sides 46 curve inwardly. As a consequence of the unstressed shape of the strip, when the member 22 is compressed between the track 24 and the belt 26, pressure may be exerted over the whole of the area 48 shown in Figure 16 and bounded by the chain dotted lines 50 and 52 so that the whole area of the portion of the film located on the upper surface 14a of the plate 14 during recordal of an image may be held stationary under pressure from the member 22. The size of the area 48 depends upon the degree of compression which the member 22 undergoes between the track 24 and the belt 26. The greater the compression, the more the curved lines 50 move outwardly. Thus, the degree of compression is chosen to ensure that the spacing between the lines 50 is greater than the width of the film 17 so that the whole width of the film 17 may be under pressure as seen in Figure 17 and in Figure 17.

Also, as seen in Figure 17, rows of teeth 41 and 43 provided around the track 24 and the belt 26 respectively and engaged with corresponding rows of apertures 45 extending around the member 22 positively prevent slipping between the member 22 and the track 24 and belt 26.

In the embodiment of Figures 18 to 21, the belt 26 of the previous embodiments and its supporting means are replaced by a pair of wheels 53 which are coaxial with and spaced apart from each other and are rotatably mounted in the walls 8 of the housing 2. Motor 32 drives the wheels in synchronism with each other via gearing 54 and a drive shaft 55. The housing 2, instead of being elongated as in the previous embodiments, is somewhat of square shape in the embodiments of Figures 18 to 21.

Furthermore, in this embodiment the member 22 is maintained in frictional engagement with the track 24 and the wheels 53 by magnetic forces, rather than forces

0002338

due to its own resilience. For this purpose, the member 22 is constructed of an endless web 57 of material of low flexural rigidity and provided along each of its opposite edges with an endless magnetized strip 56, for example of magnetic rubber. Embedded within the material of the web 57 are a plurality of transversely extending rods 58 of relatively high flexural rigidity disposed at closely and equally spaced positions around the web 57 so that the stiffness of the member 22 against bending about a longitudinal axis is greater than against bending about a transverse axis. The ends of the rods 58 can be seen in Figure 20, and some of them are partially indicated in chain lines in that Figure also. The track 24 is provided with strips 60 of magnetic material, which extend around the track and cooperate with the strips 56 so that the engagement between the member 22 and the track 24 and wheels 53 is maintained.

The unstressed cross sectional shape of the web 57 with the rods 58 therein is shown in chain dotted lines 57a in Figure 21, this Figure showing in full lines the shape assumed by the web 57 in operation. Thus, as can be seen, the lower surface would, in the absence of the magnetic forces, be curved as shown in chain dotted lines and the upper surface of the web 57 would be straight, the rods 58 in that case being straight and unstressed. The lower surface of the web 57 in the operative position is straight in cross-section and the

0002338

upper surface convex, the rods 58 being flexed downwardly as seen in Figure 21. Thus, the magnetic forces developed between the strips 56 and 60 flex and stress the web 57 from the position shown in chain dotted lines in Figure 21 to the full line position in that Figure so that a substantially uniform pressure may be exerted on the film 17. To achieve this uniform pressure, the unstressed curved shape (the curve shown in chain dotted lines in Figure 21) of the outer surface (i.e. the under surface as seen in Figure 21) of the web 57 should be of the shape assumed by a beam supported simply at its ends under a load uniformly distributed along the length of the beam; such shape is a quartic curve defined by the equation:

$$y = w \ \frac{x(\ell-x) \ (\ell^2 + \ell x - x^2)}{24D}$$

where y and x have their usual meanings in coordinate geometry, w is the load per unit length on the beam, $\ell$ is the length of the beam and D is the flexural rigidity of the beam.

The operation of the embodiment of Figures 18 to 21 is similar to that of Figures 1 to 8 except that the film 17 may, as shown, move upwardly into the space between the wheels 53 with the result that this embodimen may be relatively compact.

The strips 56 may each comprise a north magnetic pole and a south magnetic pole facing outwardly and each running around the entire periphery of the member 22. As an alternative, alternating north and south poles may be provided at successive positions around the periphery of the member 22 and similar alternating north and south poles may be provided around the track 24, in place of the strips 60. The alternating poles on the member 22 will then cooperate with the alternating poles in the housing 2 to ensure that no slipping occurs between the member 22 and the housing 2. Similar alternating poles may be provided on the wheels 53. Thus, with this arrangement, accurate timing of the movement of the member 22 may be achieved since the alternating magnetic poles act rather like inter-engaged teeth.

Figures 22 and 23 illustrate an embodiment with an alternative means for accurately timing movement of the member 22, which member may take any of the forms previously described. In this embodiment, the plate 14 is slidably mounted on guides indicated diagrammatically at 80 for horizontal reciprocation, relative to the housing 2, by a reciprocation device 70. Flexible strips 10a, only one of which can be seen in Figures 22 and 23, connect raised portions 10b (only one of which can be seen in Figures 22 and 23) at the edges of the plate 14 with the left-hand side wall 6. Thus, the surfaces of the raised portions 10b and the flexible strips 10a form part of the track 24 inside the housing 2. The purpose of the

0002338

reciprocation of the plate 14, which is permitted by the flexibility of the strips 10$\underline{a}$, is to vary the length of the path around which the member 22 is moved. Thus, if the period of orbiting of the member 22 is too great, the path length may be shortened so that, without varying the speed of the wheel 53, the period of rotation will be reduced. On the other hand, when the period of orbiting or rotation of the member 22 is less than the required period, the path length may be lengthened thereby to cause an increase in the period without changing the speed of driving of the wheels 53.

The way in which this variation in path length is achieved may be understood by comparing Figures 22 and 23. In Figure 22, it can be seen that the point X at which the member 22 contacts the portions 10$\underline{b}$ on the plate 14 is spaced a distance Z1 from the inner surface of the right-hand wall 6 and the distance Z2 from the remote end of the plate 14. Thus, the member 22 must roll along the portion 10$\underline{b}$ through a distance Z2 before moving onto the strips 10$\underline{a}$. In Figure 23, however, in which the plate 14 has been moved to the right relative to the position of the plate shown in Figure 22, whilst the point of contact X is still spaced a distance Z1 from the inner surface of the wall 6, it is spaced a distance Z3 from the remote or left-hand end of the plate 14, where Z3 is less than Z2. Thus the distance

- 21 -

through the member 22 must roll along the portions 10b before reaching the strips 10a is less in Figure 23 than in Figure 22. Since the length of the strips 10a is invariable, as is the length of the remaining portion of the track 24, the total distance through whi the member 22 must orbit in Figure 23 is less than tha in Figure 22. The reciprocating movement of the plate 14 may be carried out continuously in which case, if the period of orbiting is too small so that the member 22 arrives at the plate 14 too soon the arrangement wil be such that the distance between the point X and the remote end of the plate 14 is greater than if the memb 22 is orbiting too slowly. Thus, with continuous reciprocation of the plate 14, self-correction of any mis-timing of the orbiting of the member 22 may be achieved. In this case, since the film will be moved, when trapped between the member 22 and the plate 14, recordal of images should take place at a time when the plate 14 is stationary e.g. at the instant when it is reversing direction. Alternatively, a sensor may be provided for sensing arrival of the member 22 at a predetermined position in its orbital path and its ti of arrival compared with a clock signal. A difference signal may then be derived to adjust the position of plate 14 which would then remain stationary in its n position until further errors in the timing of the orbiting of the member 22 are detected.

Various modifications are possible within the scope of the invention. For example, synchronisation of the orbiting of the member 22 could be achieved by providing it with teeth which engage with teeth in the track and on the belt 26 or wheels 53 as the case may be. Further, in the embodiment of Figures 22 and 23, instead of recording images when the plate 14 is stationary, the arrangement could be such that the images are recorded when the plate 14 is moving in order to achieve image motion compensation where the device is provided in a camera for taking, for example, aerial photographs. In the embodiment of Figures 1 to 8, the support 30 could comprise a set of rollers. In this case, the belt 26 could be omitted and all or only selected ones of the rollers could be driven; since such rollers constitute an inner track supporting the member 22 and defining its path of movement, only a portion of such inner track is driven where only selected ones of the rollers are driven. Thus, it will be understood that it is not essential that the whole of the inner track need be driven, as is the case in each of the illustrated embodiments (the inner track being constituted by the surfaces of the belt 26 on the wheels 53). As an alternative to the gearing mechanism for driving the wheels 53 in synchronism shown in the drawings, the two wheels 53 could be directly connected to each other by a shaft extending between them, but in this case the film would not be able to rise up between the wheels beyond the level of the shaft, so that the device may have to be made larger. In place of the pair of wheels 53, a drum may be provided extending substantially the whole way between the walls 8 of the housing 2. Although the track 24 in the illustrated embodiments has been of oval or generally square shape, it could in an alternative embodiment be substantially circular.

Although in each of the embodiments, there has only been a single flexible rolling member it is possible in the scope of the invention to have two or more such members so that they operate in turn to move a fresh portion of the web into engagement with the support surface, to hold it there and then to release it. Where plural such members are provided, it is desirable that either positive engagement means should be provided between the member and the inner and outer tracks defining the path around which they move or that some means be included for correcting any variation in the timing of the movement of the members around their path.

Although a single belt 26 has been shown in the drawings, it will be possible to provide instead two such belts side by side, which may assist in ensuring proper engagement is maintained between these belts and the rolling member.

Referring Figure 11, the rollers 22d have been shown as closely adjacent each other. Desirably, therefore, these rollers should be constructed so that there is little friction between. This may be achieved by making alternate rollers of polyacetal and the intervening rollers of molybdenum-disulphide-filled nylon.

Although the support surface 14a of the plate 14 has been shown as spaced downwardly relative to the track on which the rolling member runs, this is not essential. With regard to Figure 15, the degree of flatness of the unstressed shape of the member 22 shown therein depends upon the sharpness of the curvature of the strip 42 from which is made. Thus, it is possible in some embodiments that where only small a degree of curvature is provided in the strip 42, the unstressed shape of the member 22 will be much less than that shown in Figure 15.

Regarding the embodiment of Figures 18 to 21, it should be understood that the magnetic strips along the edges of the member 22 could be omitted if the member 22 were itself made of a magnetized material; or, if the member 22 were made of magnetic material, magnetized strips could be provided in the track 24 and on the wheel 53. Also it is possible to arrange that the magnetic forces be generated across the whole width of the member 22 instead of just at the edges as shown in the illustrated embodiment.

CLAIMS:

1.   A mechanism for transporting a web through a work zone and intermittently holding portions of said web stationary in said work zone comprising:

inner track means (25; 53) and outer track means (24) mounted at fixed positions with respect to each other and defining between them an endless path;

a flexible member (22) located in said path in engagement with said inner and outer track means (26; 53; 24);

drive means (32) for driving at least a portion of the inner track means (26; 53) to cause said member (22) to roll along the outer track means (24) and move repeatedly around said endless path;

support means (14) including a web support surface (14a) located adjacent a portion of said endless path and defining said work station; and

web supply means (16) and web take-up means (18) arranged respectively to supply web (17) to and remove web from input and output zones at opposite sides of said work station so that, each time said member (22) moves around said path, said member (22) successively moves a portion of said web (17) supplied by said supply means (16) into contact with said surface (14a), holds said portion in contact with said surface (14a) and

0002338

releases said portion to permit a fresh portion of the web (17) to be moved into contact with, held against and released from said surface;

characterised in that said flexible member (22) is constructed to generate an expansion force which expands said member (22) into engagement with said tracks (25;53;24).

2.    A mechanism according to claim 1, wherein said suppy means (16) and said take-up means (18) are operable continuously so that, during said cooperation of said member (22) with said support surface (14a), web (17) is supplied continuously into a loop in said input zone and taken from a loop in said output zone.

3.    A mechanism according to claim 1, wherein said flexible member (22) is resilient, deformation of said member (22) generating said expansion force.

4.    A mechanism according to claim 3, wherein said flexible member (22) is an empty loop of resilient material.

5.    A mechanism according to claim  3, wherein said member (22) comprises an endless loop of material containing a plurality of resilient members (22a to 22d), deformation of which generates said expansion force.

6. A mechanism according to claim 5, wherein said endless loop of material (22) is also resilient.

7. A mechanism according to claim 3, wherein said member (22) is made from a strip of material (42) which is curved in cross-section, said strip (42) being bent into said loop such that the concave side of the strip is inside the loop.

8. A mechanism according to claim 7, wherein the curvature of the said cross-section is sharper in the region of the centre (40) of the strip (42) than in regions at the edges.

9. A mechanism according to claim 1, wherein said flexible member (22) is constructed so that said expansion force is a magnetic force.

10. A mechanism according to claim 9, wherein said member (22) comprises a loop of material (57), said magnetic forces being generated along the edges (56) of said loop.

0002338

11. A mechanism according to claim 10, wherein said loop (57) is resiliently resistant to bending about a longitudinal axis, the unstressed shape of the outer surface of the said loop is convex as seen in transverse cross-section, and said magnetic forces are great enough to overcome said resilient resistance so that the convex surface is at least partially flattened in at least portions of the loop holding the web (17) against the support surface (14a).

12. A mechanism according to claim 11, wherein said member comprises a loop of material (57) of relatively low flexural rigidity and a plurality of rods (58) of relatively high flexural rigidity extending transversely to and at equally spaced positions around said loop, said rods (58) providing said resilient resistance.

13. A mechanism according to claim 11, wherein the shape of the convex surface, as seen in cross-section, is the same as a quartic curve of the type assumed by a beam supported at both ends and subjected to a uniformly distributed load.

14. A mechanism according to claim 1, wherein said inner track comprises a drive belt (26).

- 5 -     0002338

15.  A mechanism according to claim 1, wherein said inner track comprises wheel means (53).

16.  A mechanism according to claim 1, including means (41;43;45) positively restraining said member against sliding movement relative to said inner and outer tracks.

17.  A mechanism according to claim 16, wherein said restraining means comprises teeth (41;43).

18.  A mechanism according to claim 1, including means (70;80;10a) for varying the period of the movement of the flexible member around said path.

19.  A mechanism according to claim 18, wherein said varying means (70,80;10a) comprises means for adjusting the length of the path.

20.  A mechanism according to claim 19, wherein said outer track (24) includes a portion (10b) movable in a direction parallel to said track portion (10b), a flexible portion (10a) connecting said movable track portion (10b) to a fixed portion of said track and a further track portion extending at an angle to said

0002338

movable portion (10b) and positioned upstream of said movable portion with respect to the direction of movement of said member (22), said adjusting means comprising means (70) for moving said movable portion (10b) so that the distance from the point (X) at which said member (22) contacts said movable portion to said flexible portion (10a) may be varied.

21. A mechanism according to claim 20, wherein said adjusting means comprises means (70) for continuously reciprocating said movable portion of said track so that any deviations in the period of movement of said member (22) around said path may be automatically corrected.

22. A mechanism according to claim 20, wherein said movable track portion (10b) is fixed with respect to said support surface (14a), said support member (14) being movable with said track portion (10b).

23. A mechanism according to claim 1, chacterised by a plurality of said flexible members (22) arranged in said path and spaced apart from each other.

0002338

FIG.1

FIG.2

FIG.3

FIG.4

FIG.5

FIG.6

FIG.7

FIG.8

FIG.9

FIG.10

FIG.11

FIG.12

FIG.13

0002338

FIG.14

FIG.15

0002338

## FIG.16

## FIG.17

## FIG.18

## FIG.19

0002338

FIG.20

56
57
22
58
56
58

FIG.21

57a   57
58
56   14a   14
17
54a
14a
56

0002338

## FIG.22

## FIG.23